# EUROPÄISCHE PATENTSCHRIFT

(11) **EP 1 570 113 B1**
(45) Veröffentlichungstag und Bekanntmachung des Hinweises auf die Patenterteilung: **20.09.2006**
(21) Anmeldenummer: 03775342.3
(22) Anmeldetag: 11.11.2003
(51) Int. Cl.: C25B 11/04, B21D 31/04, H01M 4/04, H01M 4/26, H01M 4/74, H01M 10/28

(54) **VERFAHREN ZUR HERSTELLUNG VON BESCHICHTETEN STRECKMETALLEN UND VERWENDUNG SOLCHER METALLE ALS STROMABLEITER IN ELEKTROCHEMISCHEN BAUELEMENTEN**
METHOD FOR PRODUCING DRAWN COATED METALS AND USE OF SAID METALS IN THE FORM OF A CURRENT DIFFERENTIATOR FOR ELECTROCHEMICAL COMPONENTS
PROCEDE DE PRODUCTION DE METAUX ETIRES REVETUS ET UTILISATION DE CES METAUX EN TANT QUE DERIVATEURS DE COURANT DANS DES COMPOSANTS ELECTROCHIMIQUES

(30) Priorität: 06.12.2002 DE 10257186
(43) Veröffentlichungstag der Anmeldung: 07.09.2005
(73) Patentinhaber: Fraunhofer-Gesellschaft zur Förderung der angewandten Forschung e.V., 80686 München (DE)
(72) Erfinder: FUTSCHER, Heinz, 31061 Alfeld (DE); NEUMANN, Gerold, 25469 Halstenbek (DE)
(74) Vertreter: Olgemöller, Luitgard Maria
(86) Internationale Anmeldenummer: PCT/EP2003/012596
(87) Internationale Veröffentlichungsnummer: WO 2004/053200

(56) Entgegenhaltungen:
- EP-A- 0 383 204
- DE-A- 19 633 463
- US-B1- 6 254 743

## Beschreibung

Die vorliegende Erfindung betrifft ein Verfahren zur Herstellung beschichteter Streckmetalle, die sich u.a. als Stromableiter in elektrochemischen Bauelementen, insbesondere in nicht-wässrigen elektrochemischen Zellen, eignen. Die Erfindung betrifft weiterhin mit diesem Verfahren hergestellte Streckmetalle und deren Verwendung als Stromableiter.

Typische Vertreter nichtwässriger elektrochemischer Zellen sind Lithiumakkumulatoren. Diese sind in verschiedenen Ausführungsformen seit langem bekannt und vielfach beschrieben worden. Der Aufbau dieser Zellen stellt sich wie folgt dar: Einer Kathode, üblicherweise einer stabilen Lithiumeinlagerungsverbindung, wird einer Anode, entweder aus Lithiummetall oder Graphit, gegenübergestellt. Beide Elektroden sind durch einen Separator getrennt. Das komplette System ist von einem Elektrolyt durchsetzt, der die lonenleitfähigkeit für Lithiumionen herstellt. Dabei handelt es sich in der Regel um ein in einem oder mehreren organischen Lösemitteln gelöstes Lithiumsalz. Beim Laden bzw. Entladen werden zwischen den Elektroden Lithiumionen hin- und herbewegt.

Um die Problematik ungebundener Elektrolytflüssigkeiten im Innern des Batteriekörpers zu umgehen, wurde erfolgreich versucht, Elektroden und Separator in Form von Folien auszuführen. Diese Folien zeichnen sich entweder durch eine hohe Mikroporosität aus, in der der flüssige Elektrolyt immobilisiert wird, oder durch die Zugabe geeigneter Polymere, die mit der Flüssigkeit gelifizieren.

Neben den beschriebenen elektrochemischen Bestandteilen benötigen derartige Bauelemente Stromableiter, um den Elektronenstrom zu sammeln und abzuführen und für den Verbraucher nutzbar zu machen. Bei den Stromableitern handelt es sich um Metalle, die entweder als Folien oder als Streckmetalle eingebracht werden. Sie sollen eine Reihe von Bedingungen erfüllen, nämlich (a) elektrochemisch stabil gegenüber Korrosion sein, (b) zur Sicherstellung eines niedrigen Übergangswiderstandes einen guten Kontakt zu den jeweiligen Elektroden besitzen, (c) ein geringes Gewicht haben, um hohe Energiedichten zu gewährleisten, sowie (d) günstige elastische Eigenschaften aufweisen, um Volumen-schwankungen bei Interkalation bzw. Deinterkalation von Lithiumionen in den Elektroden während des Betriebes zu kompensieren. Als in der elektrochemischen Umgebung des Akkumulators stabile Metalle haben sich für das gängige System mit Lithiumkobaltoxid als Kathodenmaterial und Graphit auf der Anodenseite Aluminium bzw. Kupfer bewährt. Das vorliegend beschriebene Verfahren ist jedoch nicht auf diese Metalle beschränkt.

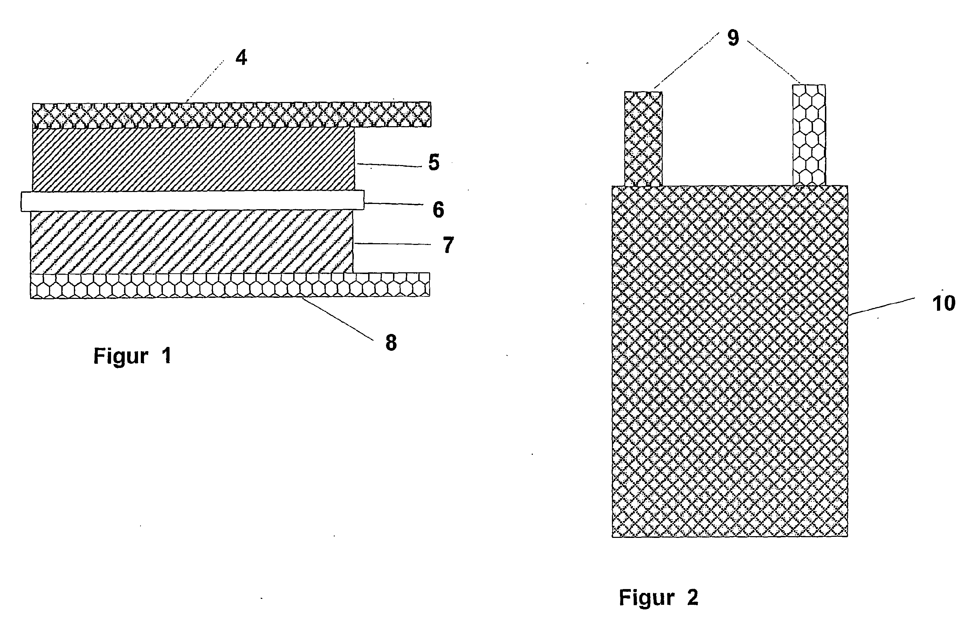

Die Herstellung von Streckmetallen soll nachstehend kurz erläutert werden. Das Verfahren ist schematisch in Figur 1 dargestellt. Metallfolien (**1**) geeigneter Dicke werden in einem Stanzwerkzeug (**2**) mit einem Stanzmuster versehen und daran anschließend gereckt (**3**). Über die Auslegung des Stanzmusters und Stärke der Reckung werden die geometrischen Daten des Streckmetalles wie Stegweite, Öffnungsdiagonalen und Anteil offener Fläche festgelegt.

Streckmetalle werden u.a. auch als Metallgitter in Stahlbeton eingesetzt. Gemäß US 6,254,743 wird ein solches Metallgitter - das nicht zwangsläufig ein Streckmetall sein muß - mit einer elektrokatalytischen Beschichtung versehen. Gemäß EP 383 204 A1 wird ein Streckmetall als Anode zur Korrosionsverhinderung (Kathodenschutz) von Stahlverstärkungen in Beton eingesetzt. Dieses Streckmetall wurde vor dem Schlitzen und Dehnen mit einer elektrokatalytischen Beschichtung versehen.

Die Vorteile bei der Verwendung von Streckmetallen als Stromableiter für elektrochemische Bauelemente liegen auf der Hand: Gegenüber Folien haben sie eine offenporige Struktur, so dass das Gewicht der Stromableiter reduziert werden kann, was Vorteile bei der gravimetrischen Energiedichte mit sich bringt. Darüber hinaus ist das Streckmetall in der Weise elastisch, dass es den Volumenänderungen während Interkalation und Deinterkalation des Lithiums in den Elektroden folgen kann, ohne dass es zu einer Delamination kommt. Eine Delamination würde wiederum die Zykelfestigkeit der Akkumulatoren reduzieren.

Beim Einsatz von Streckmetall in Lithium-Polymer-Akkumulatoren wird ein weiterer fertigungstechnischer Vorteil erzielt. Dieser Akkumulatortyp wird üblicherweise wie folgt gefertigt: die Elektroden werden entweder direkt auf Metallfolien abgeschieden (siehe US 6,306,215) oder durch Lamination unter Druck und gegebenenfalls Temperatureinwirkung an den Stromableiter anlaminiert (DE 199 52 335). In einem zweiten Schritt wird dann durch Lamination oder durch Wickeltechnik ein fester Verbund aus den drei unterschiedlichen Folien für Anode mit Stromableiter, Separator und Kathode mit Stromableiter hergestellt. Dieser wird dann mit Elektrolytflüssigkeit getränkt. Dabei muss die Elektrolytflüssigkeit in dem kompletten Folienverbund gleichmäßig verteilt werden. Dieses geschieht im wesentlichen über Kapillarkräfte. Häufig wird dieser Prozess auch noch durch eine zusätzliche Ausbildung von Poren unterstützt, die dadurch erzeugt werden, dass den Elektroden- und Separatormaterialien ein Plastifizierer zugesetzt wird, der nach dem Zusammenlaminieren der Bestandteile durch ein Lösungsmittel wieder entfernt wird. Geschlossene Metallfolien erschweren das Eindringen des Flüssigelektrolyten in den Akkumulatorkörper erheblich, d. h. sie verlängern die Prozessdauer. Die Verwendung eines offenmaschigen Streckmetalles bietet daher erhebliche prozesstechnische Vorteile.

Um eine gute Haftung und einen niedrigen Übergangswiderstand an der Grenze zwischen metallischem Stromableiter und anlaminierter Elektrode zu erreichen, hat es sich als vorteilhaft herausgestellt, die Stromableiter vor der Anbindung an die Elektrode mit einer dünnen Haftvermittlungsschicht zu überziehen, bei der es von besonderem Vorteil ist, wenn sie eine elektronische Leitfähigkeit besitzt. Zur Aufbringungstechnik und zu geeigneten Kompositionen solcher Haftvermittler sind im Stand der Technik eine Reihe von Vorschlägen gemacht worden. Sie umfassen das Beschichten von Stromableitern aus Streckmetallen oder von anderen durchbrochenen Ableitern (Netzen, Gittern) in Flüssigkeiten oder Pasten durch Spin Coating, Tauchen oder Bestreichen (siehe US 6,306,215 und US 5,824,120), das Aufbringen einer Schicht, die Kohlenstoff-Pulver und ein die Haftfähigkeit verbesserndes Polymer enthält, mit Hilfe elektrostatischer Kräfte (US 5,542,163), oder ein Plasmapolymerisationsverfahren, durch das eine Schicht eines elektrisch leitenden, polymeren, adhäsionsverbessernden Materials auf dem Stromsammler aufgebracht wird (siehe US 6,007,588). Alle genannten Druckschriften beschreiben übrigens elektrochemische Zellen aus Elektrodenmaterialien mit einem Plastifizierer, der nach Zusammenlaminieren der einzelnen Bestandteile (Elektroden- und Separatorschichten oder-folien, Stromableiter) wieder aus den Zellen herausgewaschen wird, um Porenvolumen für die Elektrolytflüssigkeit zu erzeugen, wie oben beschrieben. Es ist auch möglich, die Beschichtung durch das Aufbringen einer geeigneten Suspension mit Hilfe drucktechnischer Verfahren aufzubringen. Entsprechende Suspensionen sind im Handel erhältlich. Es kommen druckwalzentechnische Verfahren wie zum Beispiel das Reverse Roll Coating zum Einsatz. Die Suspensionen bestehen in der Regel aus einer Kohlenstoff-/Polymermischung in einem geeigneten Lösemittel wie etwa Wasser.

Bei der Applikation von Beschichtungslösungen mittels drucktechnischer Verfahren stellen sich in der praktischen Umsetzung erhebliche Probleme ein. Die Auftrags-Schichtdicken der Suspension liegen in der Regel zwischen ca. 1 µm und ca. 20 µm. Im Druckwalzen-Auftragsverfahren stellt man immer wieder eine mangelhafte Benetzung fest, die zu einer ungleichmäßigen Verteilung der Suspension auf dem Metall führt. Im Betrieb der mit derart beschichteten Streckmetallen bestückten elektrochemischen Bauelemente, z.B. von Akkumulatoren, kommt es dadurch zu einer Erhöhung des Übergangswiderstandes oder sogar zum Kontaktverlust zwischen Stromableiter und Elektrode an den Stellen schlechter Benetzung, mit nachteiligen Folgen für die Lebensdauer der Bauelemente. Die Verwendung dickerer Haftvermittlerschichten verbietet sich jedoch vor dem Hintergrund einer damit verbundenen unerwünschten Reduktion der Energiedichte.

Bei Einsatz drucktechnischer Verfahren zur Aufbringung der Haftvermittlerschichten stellen sich zudem apparative Probleme ein. Um eine präzise Führung der Folien während der Beschichtung zu gewährleisten, ist eine Führung der zu beschichtenden Metallfolie über mehrere Umlenkrollen erforderlich. Außerdem muss die Folie beim Durchlauf durch die Beschichtungsmaschine unter einer gewissen mechanischen Spannung gehalten werden. Während dies bei Verwendung von geschlossenen Metallfolien wie zum Beispiel aus Aluminium oder Kupfer bei Foliendicken bis hinunter zu ca. 10 bis 15 µm kein technisches Problem darstellt, neigen Streckmetalle bei schon geringen Zugspannungen zum Reißen. Besonders kritisch stellt sich das bei Aluminium-Streckmetallen dar. Typische Dicken von Streckmetallen liegen bei 50 µm oder auch darunter. Selbst auf speziell für die Beschichtung von Streckmetallen ausgelegten Maschinen stellen sich massive Ausbeuteprobleme durch Zerreißen ein. Ein Übergang zu dickeren Streckmetallen aus Gründen der Prozesssicherheit verbietet sich vor dem Hintergrund einer unerwünschten Reduktion der Energiedichte aber genauso wie ihre zu dicke Beschichtung.

Aufgabe der vorliegenden Erfindung ist es, ein verbesserte Ausbeuten lieferndes Verfahren zum Herstellen beschichteter Streckmetalle bereitzustellen, mit dem die Ober- und die Unterseite auch dünner Streckmetalle ausreichend dünn mit leitfähigem Haftvermittler beschichtet werden können.

Die genannte Aufgabe wird durch ein Verfahren gemäß Anspruch 1 gelöst Bei diesem Verfahren wird zuerst eine geschlossene Metallfolie beschichtet und diese erst dann in Streckmetall überführt. Dies bringt den Vorteil mit sich, dass die Beschichtung auf die mechanisch wesentlich stabilere Metallfolie aufgebracht wird, so dass ein die erforderlichen Eigenschaften besitzendes Produkt in hoher Ausbeute hergestellt und die Menge an Ausschuss stark verringert werden kann. Die Beschichtung kann einseitig oder beidseitig erfolgen. Völlig überraschend hat sich bei dieser Verfahrensführung gezeigt, dass die auf die Folie aufgebrachte Beschichtung bei der Reckung nicht abplatzt. Dies war in keiner Weise zu erwarten, da nicht anzunehmen war, dass sie hinreichend elastisch sein und zudem eine so gute Haftung besitzen würde, dass die bei der Streckung auftretende Verformung des unter der Beschichtung liegenden Metalles nicht zu einer Ablösung der Beschichtung führt.

Ebenfalls völlig überraschend konnte ein weiterer Vorteil der vorliegenden Erfindung festgestellt werden, nämlich der, dass sich die Lebensdauer der Stanzmesser in der Streckmetallfertigung erhöht. Dies könnte darauf beruhen, dass übliche Haftvermittler graphithaltige Suspensionen sind, die während des Stanzvorgangs als Schmiermittel für die Messer wirken und so zur Erhöhung von deren Standzeit beitragen.

Die beigefügten Zeichnungen erläutern die Erfindung. Dabei zeigt
- **Figur 1**: die Abfolge eines für einen Akkumulator geeigneten Laminates,
- **Figur 2**: die Aufsicht auf ein solches Laminat,

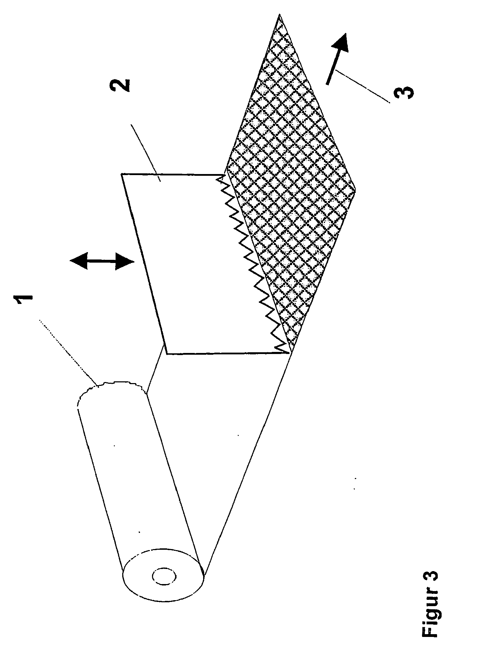

- **Figur 3**: eine schematische Darstellung der Streckmetall-Herstellung,
- **Figur 4**: ein Diagramm mit der relativen Kapazität eines mit einem erfindungsgemäß hergestellten Streckmetall als Ableiter versehenen Akkumulators, und
- **Figur 5**: die relative Kapazität eines Akkumulators mit erfindungsgemäß hergestelltem Streckmetall als Ableiter im Vergleich zur Kapazität eines Akkumulators mit üblich hergestelltem Ableiter.

Besonders günstig ist es, wenn man die Metallfolie noch vor dem Beschichtungsvorgang einer Korona-Oberflächenbehandlung unterwirft, weil diese Maßnahme die Haftung der Beschichtung auf dem Streckmetall weiter verbessert.

Es ist häufig bevorzugt, das Metall beim Verstrecken höchstens so weit zu recken, dass die kurze Diagonale eine Länge von etwa 1 mm und die lange Diagonale eine Länge von etwa 2 mm erhält. In Abhängigkeit von der Flexibilität der verwendeten Beschichtungsmaterialien kann es nämlich in manchen Fällen zu einer Ablösung der Beschichtung kommen, wenn eine stärkere Streckung vorgenommen wird.

Als Materialien für die Beschichtung der später dem Streckprozess zu unterwerfenden Metallfolien eignen sich alle diejenigen, mit denen sich die gewünschten Eigenschaften erreichen lassen, die das Streckmetall für seine spätere Verwendung als Stromableiter benötigt. Das sind vor allem eine gute Adhäsion an die Elektroden sowie eine gute elektrische Leitfähigkeit. Es sollte aber klar sein, dass das erfindungsgemäße Verfahren nicht auf die Herstellung von beschichteten Streckmetallen für Stromsammler und -ableiter beschränkt ist. Vielmehr kann es auch überall dort angewendet werden, wo dünne Streckmetalle mit empfindlichen, dünnen Beschichtungen eingesetzt werden sollen, die diese Eigenschaften verleihen, und es nicht notwendig ist, dass auch die beim Stanzen und Recken erzeugten Öffnungen seitlich beschichtet sind.

Um eine Beschichtung mit guter Adhäsion und guter elektrischer Leitfähigkeit bereitzustellen, werden als Materialien Graphit oder andere geeignete Kohlenstoff-Materialien sowie adhäsionsverbessernde organische Polymere eingesetzt. Die Kohlenstoff-Materialien können in einem Bindemittel wie z.B. einer organischen Polymersuspension aufgebracht werden, das anschließend auf der Oberfläche getrocknet, (nach)gehärtet oder einer zusätzlichen Polymerisation unterworfen werden kann. Ein Beispiel ist EB-012 von der Firma Acheson, USA, eine Graphitsuspension, die einen thermoplastischen Binder enthält. Weitere Beispiele sind Suspensionen mit Silber anstelle von Graphit. Die Bindemittel können z.B. Epoxyharze, Thermoplaste, Duromere, Vinylharze, Cellulose oder Fluorelastomere sein. Statt Graphitsuspensionen können aber auch andere geeignete Materialien eingesetzt werden, sofern sie die genannten Eigenschaften verleihen, zum Beispiel elektrisch leitende organische Polymere wie Polyvinylpyrrolidon. Weiterhin gut geeignet als Beschichtung sind Polymersuspensionen, die nach dem Aufbringen auf das Metall graphitisiert werden.

Das erfindungsgemäße Verfahren wurde im Hinblick auf die schlechte Qualität von drucktechnisch beschichteten Streckmetallen aufgefunden. Es ist aber nicht auf bestimmte Beschichtungstechniken beschränkt. Statt eines drucktechnischen Auftrags können z.B. Spin Coating, Walzenauftrag, Rakelauftrag, Tauchbeschichten, elektrostatisches Aufbringen (Pulverbeschichten) oder Plasmaverfahren eingesetzt werden, wie sie unter anderem aus dem oben genannten Stand der Technik bekannt sind.

Die erfindungsgemäß hergestellten Streckmetalle unterscheiden sich von den herkömmlichen dadurch, dass ihre beim Stanzen und Recken erzeugten Öffnungen seitlich nicht beschichtet sind. Zumindest für ihre Verwendung als Stromsammler und -ableiter ist dies jedoch ohne jeden Nachteil.

Die erfindungsgemäß hergestellten bzw. herstellbaren Streckmetalle sind unter anderem insbesondere für den Einsatz in solchen elektrochemischen Zellen geeignet, bei deren Herstellung es vermieden wird, den Elektrodenmaterialien und/oder dem Separatormaterial zur Erzeugung einer für die Aufnahme des Flüssigelektrolyten notwendigen Porosität einen Plastifizierer zuzusetzen, der in einem anschließenden Waschprozess wieder entfernt werden müsste. Dieses Herstellungverfahren, das in den US-Patentschriften 5,456,000 bzw. 6,063,519 beschrieben ist, verlangt nämlich als zusätzliche Anforderung an die Haftvermittlerschicht, dass sie gegenüber der Waschflüssigkeit chemisch stabil ist. Beim Herauswaschen des Plastifizierers kann es dabei leicht zu einer partiellen Ablösung der Elektrodenfolien vom Stromableiter kommen, was negative Folgen für die Zykelfestigkeit und die Impedanz eines Akkumulators hat. Es wird daher erfindungsgemäß als besonders günstig vorgeschlagen, elektrochemische Bauelemente mit den erfindungsgemäß hergestellten Stromableitern herzustellen, deren Elektroden und Separator ohne herauszuwaschenden Plastifizierer erzeugt wurden.

Nachstehend soll die Erfindung anhand von **Beispielen** näher erläutert werden.

### Beispiel 1

### Kupferstreckmetall

50 µm starke Kupferfolie wurde beidseitig mit einer kommerziell erhältlichen Suspension EB012 von Acheson Colloids B.V. (einer thixotropen Graphitsuspension in einem thermoplastischen Binder) beschichtet. Zur Einstellung der für den Auftrag optimalen Viskosität wurde der Feststoffgehalt in der Suspension durch Wasserzugabe von 30% auf 20% reduziert. Die Beschichtung erfolgte über eine einfache Kaschierwalze einseitig zunächst auf der Vorderseite und in einem zweiten Durchlauf auf der Rückseite. Bei der Kupferfolie handelte es sich um eine kommerziell erhältliche Standardfolie für Batterieanwendungen. Die Nassauftragsstärke betrug ca. 20 µm bei einer Vorlaufgeschwindigkeit von 2,5 m/min. Die Trocknung erfolgte bei ca. 80 °C. Nach der Trocknung betrug die Schichtdicke der Haftvermittlerschicht noch 4 µm. Anschließend wurde die so beschichtete Folie zu Streckmetall weiterverarbeitet. Eine Streckung wurde derart eingestellt, dass die kurze Diagonale eine Länge von 1 mm und die große Diagonale eine Länge von 2 mm hat. Das erhaltene Material war ohne Ablösungen und ohne Risse im Metall und konnte zu 100 % weiter eingesetzt werden.

### Vergleichsbeispiel 1

Beispiel 1 wurde wiederholt, wobei die Streckung derart eingestellt wurde, dass die kurze Diagonale eine Länge von 1,5 mm und die große Diagonale eine Länge von 3 mm hatte. Beim Produkt fanden sich Risse in der Beschichtung; an manchen Stellen war sie abgeplatzt. Der Ausschuss betrug etwa 30 % Flächenanteil.

### Vergleichsbeispiel 1a

Beispiel 1 wurde wiederholt mit der Maßgabe, dass die Kupferfolie zuerst in Streckmetall überführt und dieses so wie beschrieben beschichtet wurde. Auf dem erhaltenen Material fanden sich ungleichmäßig verteilt eine Vielzahl von rissigen Stellen und Stellen mit abgeplatzter Beschichtung. Von 6 Chargen (Rollen) war überhaupt nur eine so brauchbar, dass sie für die Weiterverarbeitung des Streckmetalls zu Stromableitern eingesetzt werden konnte. lnsgesamt waren mehr als 50 % der Fläche des Streckmetalls schadhaft.

### Beispiel 2

### Aluminiumstreckmetall

50 µm starke Aluminiumfolie wurde beidseitig mit der oben erwähnten, kommerziell erhältlichen Suspension EB012 von Acheson Colloids B.V. beschichtet. Zur Einstellung der für den Auftrag optimalen Viskosität wurde der Feststoffgehalt in der Suspension durch Wasserzugabe von 30 % auf 20 % reduziert. Die Beschichtung erfolgte über eine einfache Kaschierwalze einseitig zunächst auf der Vorderseite und in einem zweiten Durchlauf auf der Rückseite. Bei der Kupferfolie handelte es sich um eine kommerziell erhältliche Standardfolie für Batterieanwendungen. Die Nassauftragsstärke betrug ca. 20 µm bei einer Vorlaufgeschwindigkeit von 2 m/min. Die Trocknung erfolgte bei ca. 80 °C. Nach der Trocknung betrug die Schichtdicke der Haftvermittlerschicht noch 4 µm. Anschließend wurde die so beschichtete Folie zu Streckmetall weiterverarbeitet. Eine Streckung wurde derart eingestellt, dass die kurze Diagonale eine Länge von 1 mm und die große Diagonale eine Länge von 2 mm hat. Das erhaltene Material war ohne Ablösungen und ohne Risse im Metall und konnte zu 100 % weiter eingesetzt werden.

### Vergleichsbeispiel 2

Beispiel 2 wurde wiederholt, wobei die Streckung derart eingestellt wurde, dass die kurze Diagonale eine Länge von 1,5 mm und die große Diagonale eine Länge von 3 mm hatte. Beim Produkt fanden sich Risse in der Beschichtung; an manchen Stellen war sie abgeplatzt. Der Ausschuss betrug etwa 25 % Flächenanteil.

### Beispiel 3

### Anodenfolie

Zur Herstellung einer Anodenfolie werden 1,7 g Kugelgraphit MCMB mit 0,1 g Leitruß (Acetylen Black) und 0,2 g Polyvinylidenfluorid mit Copolymer (PVDF-HFP) mit 2 g Aceton versetzt und mit einem Schneidrührer zu einer gleichmäßig dispergierten Paste verarbeitet. Diese wird anschließend mit einem Doctor-blade auf einer Glasplatte zu einer Folie ausgezogen. Nach dem Abdampfen des Lösemittels bleibt eine selbsttragende Folie zurück, die von der Glasplatte abgenommen wird. Die Schichtdicke der getrockneten Schicht betrug etwa 100 µm.

### Beispiel 4

### Kathodenfolie

Entsprechend der Anodenfolie wird eine gleichgroße Kathodenfolie in folgender Zusammensetzung gefertigt: 3,6 g LiCoO₂ wird mit 0,2 g Leifähigkeitsruß (Acetylen Black) und 0,2 g PVDF sowie 4 g Aceton versetzt. Ihre Schichtdicke betrug ebenfalls etwa 100 µm.

### Beispiel 5

### Separatorfolie

1,5 g eines keramischen Füllstoffes (Lithiumaluminiumtitanphosphat Li_{1,3}Al_{0,3}Ti_{1,7}(PO₄)₃)wurde mit 0,5 g PVDF-HFP und 2,4 g Aceton wie in (3) beschrieben zu einer ca. 50 µm starken Separatorfolie verarbeitet.

### Beispiel 6

### Lamination

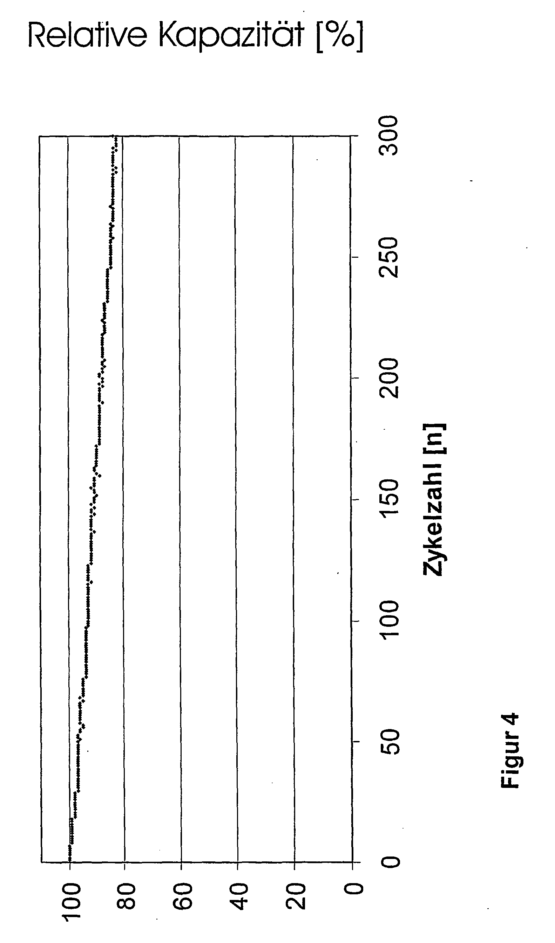

Die Lamination der Elektrodenfolien an die jeweiligen Ableitgitter erfolgt in einem Rollenlaminator. Dabei werden die Folien auf 160 °C vorgeheizt und dann unter der Rolle bei einer Andruckkraft von 236 kp laminiert. Die Vorschubgeschwindigkeit liegt bei 40 mm/s. Anschließende Tapetests zeigen eine gute Haftung der jeweiligen Folien an den entsprechenden Ableitgittern. In einem zweiten Laminationsschritt werden die drei Elemente Anode mit Kupferableitgitter, Kathode mit Aluminiumableitgitter und Separatorfolie zusammenlaminiert. Die Kraft betrug 16 kp bei ebenfalls 160 °C Laminationstemperatur und einer Vorschubgeschwindigkeit von 20 mm/s. Der Aufbau des Akkumulatorkörpers ist in den Figuren 1 und 2 gezeigt. Bei Figur 1 handelt es sich um den Querschnitt durch einen Akkumulatorkörper, während Figur 2 die Aufsicht auf einen Akkumulatorkörper zeigt. In Figur 1 ist das mit Haftvermittler beschichtete Aluminiumstreckmetall (4) mit anlaminierter Kathodenfolie (5) und der Separatorfolie (6) dargestellt. Die Gegenelektrode besteht aus mit Haftvermittler beschichtetem Kupferstreckmetall (8) mit anlaminierter Anodenfolie (7). In der Aufsicht in Figur 4 sieht man auf das Aluminiumstreckmetall (10). Seitwärts herausgeführt sind zwei Kontaktzungen (9) zur Ankontaktierung des Akkumulators nach der Verpackung in Folie.

### Beispiel 7

### Fertigstellung des Akkumulators

Der Akkumulator wurde in eine kunststoffbeschichtete Aluminiumfolie derart eingebracht, dass elektrische Kontakte von den Stromableitern nach außen geführt werden konnten. In einer wasserfreien Schutzgasatmosphäre wurde anschließend eine kommerziell erhältliche Leitsalzlösung LP30 in den laminierten Folienverbund durch Aufsaugen eingebracht. Dann wurde die Tüte hermetisch versiegelt.

Danach wird der Akkumulator formiert und anschließend elektrisch vermessen. Es zeigte sich eine hohe Zykelfestigkeit bei Belastung mit C-Rate. Deren Verlauf ist in Figur 4 dargestellt. Nach 300 Lade-/Entladezykeln sind noch über 80 % der Ausgangskapazität vorhanden.

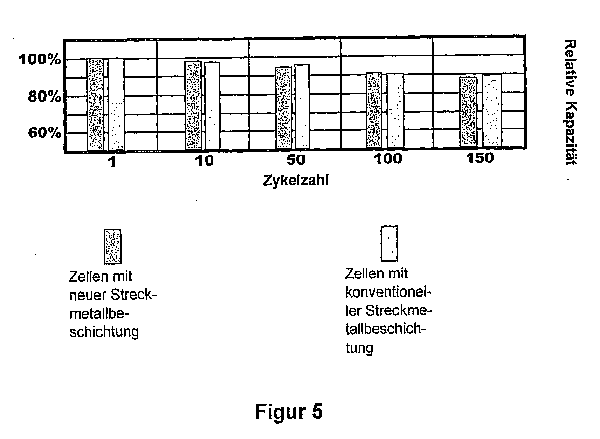

Die relative Kapazität des Akkumulators wurde mit der eines Akkumulators verglichen, dessen Ableiter aus konventionell hergestelltem, beschichtetem Streckmetall (fehlerfrei) bestand. Wie aus Fig. 5 ersichtlich, sind die Leistungsdaten beider Akkumulatoren im wesentlichen identisch. Das erfindungsgemäße Verfahren führt demnach zu Beschichtungen mit derselben Qualität, wie sie üblich beschichtete Streckmetalle besitzen.

## Patentansprüche

1. Verfahren zur Herstellung von mit einer Beschichtung versehenem Streckmetall, wobei die Beschichtung auf eine geschlossene Metallfolie aufgebracht wird und die Metallfolie erst nach dem Beschichten in Streckmetall überführt wird, **dadurch gekennzeichnet, dass** die Beschichtung Silber, Graphit oder ein anderes Kohlenstoff-Material zusammen mit einem die Haftfähigkeit verbessernden Bindemittel, ein organisches oder anorganisch-organisches Polymer, das nach dem Aufbringen auf das Metall graphitisiert wird, oder ein elektrisch leitendes organisches Polymer enthält.

2. Verfahren nach Anspruch 1, **dadurch gekennzeichnet, dass** das Metall Kupfer oder Aluminium ist.

3. Verfahren nach einem der voranstehenden Ansprüche, **dadurch gekennzeichnet, dass** die Metallfolie einer Corona-Oberflächenbehandlung unterworfen wird, bevor sie beschichtet wird.

4. Verfahren nach einem der voranstehenden Ansprüche, **dadurch gekennzeichnet, dass** bei der Überführung der Metallfolie in Streckmetall die kurze Diagonale eine Länge von bis zu 1 mm und die große Diagonale eine Länge von bis zu 2 mm erhält.

5. Verfahren nach einem der voranstehenden Ansprüche, **dadurch gekennzeichnet, dass** das Aufbringen der Beschichtung mittels einer Drucktechnik, durch Spin Coating, Aufwalzen, Aufrakeln, Tauchbeschichten, elektrostatisches Pulverbeschichten oder mit Hilfe eines Plasmaverfahrens erfolgt.

6. Mit einer Beschichtung versehenes Streckmetall, erhalten nach einem Verfahren gemäß einem der Ansprüche 1 bis 5.

7. Verwendung von Streckmetall nach Anspruch 6 als Stromableiter in einer oder für eine Anodenfolie oder in einer oder für eine Kathodenfolie.

8. Verwendung nach Anspruch 7, **dadurch gekennzeichnet, dass** der Stromableiter und die Anodenfolie bzw. die Kathodenfolie zusammenlaminiert sind.

9. Verwendung nach einem der Ansprüche 7 oder 8, **dadurch gekennzeichnet, dass** die Anodenfolie bzw. die Kathodenfolie ohne Einsatz von Plastifizierer hergestellt wurde.

10. Verwendung von Streckmetall nach Anspruch 7 in einer elektrochemischen Zelle, insbesondere einem Akkumulator.

11. Verwendung nach Anspruch 10, **dadurch gekennzeichnet, dass** der Akkumulator ein Lithiumtechnik-Akkumulator ist.

## Claims

1. Process for the production of expanded metal provided with a coating, wherein the coating is applied to a continuous metal foil and the metal foil is only converted into expanded metal after coating, **characterised in that** the coating contains silver, graphite or a different carbon material together with a binder which improves the adhesive capacity, an organic or inorganic-organic polymer, which is graphitised after application to the metal, or an electrically conductive organic polymer.

2. Process according to claim 1, **characterised in that** the metal is copper or aluminium.

3. Process according to one of the preceding claims, **characterised in that** the metal foil is subjected to a corona surface treatment before it is coated.

4. Process according to one of the preceding claims, **characterised in that** when converting the metal foil into expanded metal, the short diagonal has a length of up to 1 mm and the long diagonal has a length of up to 2 mm.

5. Process according to one of the preceding claims, **characterised in that** application of the coating is effected by means of a printing technique, by spin coating, roller application, knife coating, dip coating, electrostatic powder coating or with the aid of a plasma process.

6. Expanded metal provided with a coating, obtained by a process according to one of claims 1 to 5.

7. Use of expanded metal according to claim 6 as a shunt in or for an anode foil or in or for a cathode foil.

8. Use according to claim 7, **characterised in that** the shunt and the anode foil or the cathode foil are laminated together.

9. Use according to one of claims 7 or 8, **characterised in that** the anode foil or the cathode foil has been produced without use of plasticiser.

10. Use of expanded metal according to claim 7 in an electrochemical cell, in particular a storage battery.

11. Use according to claim 10, **characterised in that** the storage battery is a lithium technology storage battery.

## Revendications

1. Procédé de fabrication de métal étiré pourvu d'un revêtement, dans lequel le revêtement est appliqué sur une feuille métallique fermée et la feuille métallique n'est transformée en métal étiré qu'après le revêtement, **caractérisé en ce que** le revêtement contient de l'argent, du graphite ou un autre matériau carboné conjointement avec un liant améliorant l'adhérence, un polymère organique ou inorgano-organique qui est graphitisé après application sur le métal ou un polymère organique électroconducteur.

2. Procédé selon la revendication 1, **caractérisé en ce que** le métal est le cuivre ou l'aluminium.

3. Procédé selon l'une quelconque des revendications précédentes, **caractérisé en ce que** la feuille métallique est soumise à un traitement de surface corona avant d'être revêtue.

4. Procédé selon l'une quelconque des revendications précédentes, **caractérisé en ce que**, lors de la transformation de la feuille métallique en métal étiré, la petite diagonale présente une longueur allant jusqu'à 1 mm et la grande diagonale une longueur allant jusqu'à 2 mm.

5. Procédé selon l'une quelconque des revendications précédentes, **caractérisé en ce que** l'application du revêtement se fait au moyen d'une technique d'imprimerie, par revêtement en rotation, laminage, à la racle, revêtement par trempage, revêtement pulvérulent électrostatique ou à l'aide d'un procédé au plasma.

6. Métal étiré pourvu d'un revêtement, obtenu par un procédé selon l'une quelconque des revendications 1 à 5.

7. Utilisation de métal étiré selon la revendication 6 comme dérivateur de courant dans ou pour une feuille anodique ou dans ou pour une feuille cathodique.

8. Utilisation selon la revendication 7, **caractérisée en ce que** le dérivateur de courant et la feuille anodique ou la feuille cathodique sont laminés ensemble.

9. Utilisation selon l'une quelconque des revendications 7 ou 8, **caractérisée en ce que** la feuille anodique ou la feuille cathodique a été fabriquée sans utiliser de plastifiant.

10. Utilisation de métal étiré selon la revendication 7 dans une cellule électrochimique, en particulier dans un accumulateur.

11. Utilisation selon la revendication 10, **caractérisée en ce que** l'accumulateur est un accumulateur au lithium.
